# EUROPEAN PATENT APPLICATION

(11) **EP 4 227 878 A1**
(43) Date of publication of application: **16.08.2023**
(21) Application number: 21827372.0
(22) Date of filing: 27.12.2021
(51) Int. Cl.: G06Q 20/38, G06Q 20/40, G06Q 20/36, G06Q 20/10, H04L 9/32, H04L 9/08, G06K 19/06

(54) **BLOCKCHAIN-BASED AUTHENTICATION AND TRANSACTION SYSTEM**

(71) Applicant: Estorm Co., Ltd., Geumcheon-gu, Seoul 08589 (KR)
(72) Inventor: WOO, Jong Hyun, Seoul 07365 (KR); LEE, Tae Il, Gyeonggi-do 16049 (KR); JUNG, Il Jin, Gyeonggi-do 14923 (KR); SHIN, Hee Jun, Seoul 08096 (KR); JANG, Hyung Seok, Seoul 02190 (KR); SON, Min Jae, Seoul 08710 (KR); BAEK, Sang Heon, Incheon 21385 (KR); PARK, Seo Bin, Gyeonggi-do 18359 (KR); KWON, Hyo Sang, Gyeonggi-do 14405 (KR); KIM, Mi Ju, Seoul 01431 (KR); SONG, Jung Hoon, Gyeonggi-do 15884 (KR); DILSHOD, Rakhmanov, Seoul 08531 (KR); KIM, Dong Hee, Gyeonggi-do 14126 (KR); KIM, Jeon Gjin, Gyeonggi-do 10071 (KR)
(74) Representative: González López-Menchero, Álvaro Luis
(86) International application number: PCT/KR2021/019924
(87) International publication number: WO 2023/127977

(57) **Abstract**

According to the exemplary embodiments of the present invention, there is provided a blockchain based authentication and transaction system including a user DID (Distributed Identity) wallet which is an application program installed on a user's mobile terminal. Here, the user DID wallet allows a user to ascertain whether a counterpart is a legitimate party by verifying a counterpart's VP and expressing the verified counterpart ascertainment information to the user on a screen when the counterpart's VP provided from a counterpart system which is an authentication or transaction counterpart is obtained.

## Description

### Technical Field

The present invention relates to, in providing a blockchain based authentication, transaction and electronic signature service to a holder (user)'s mobile device, an on/offline mutual authentication and transaction technology configured to process an offline mutual authentication while maintaining a distance without close contact even on offline by developing an online mutual authentication DID (Distributed Identity) that provides a self-authentication value after allowing a holder to first ascertain whether a counterpart connected to the holder online is a legitimate counterpart (or authentication request).

### Background Art

Concomitant with a contactless environment due to abrogation of government-initiated electronic certificate system and Corona virus outbreak, interests on a new authentication and electronic signature technology combined both with security and convenience are drawing attention.

In terms of security aspect, the security system has evolved from a first generation Central Identity system and a second generation Federated Identity system to a decentralized blockchain based third generation DID (Distributed Identity) system.

The said DID authentication system is not only used by being limited to an online transaction but also by being used on offline transaction using QR codes and smartphones.

However, even if a DID authentication system is a safe system guaranteed by blockchain that can rely on a user's public key, and if a system initially accessed by a user or authentication request values (QR code, return URL and the like) are fake, the user's authentication information can be stolen by an attacker at any time. The conventional DID authentication technology has a risk of providing only his or her certificate of identity or electronic signature to a counterpart without a user's ascertaining an opportunity of prior knowledge to whom the certificate of identity was provided and on what the electronic signature was made.

In other words, the conventional DID authentication technology, like the hitherto developed all authentication technologies (i.e., inclusive of OTP, PKI, biometric authentication, action based authentication and blockchain authentication and the like), have developed in the manner of verifying only whether a user accessed to a particular service is a legitimate and has never verified whether a service provider providing the said particular service is a genuine service provider.

For that reason given above, when a user accesses to a service of a malicious attacker disguised as a legitimate service provider and responds to a user authentication or an electronic signature, the relevant user's identity and electronic signature have no choice but to be stolen.

Malicious attackers may exist not only online but also offline. Taking a QR code as an example, when an attacker distributes a pre-generated malicious authentication or an electronic signature QR code to a smartphone of an offline service provider, and a legitimate user recognizes and approves the same as his or her smartphone application (App), the user may approve while not knowing what content he or she actually has approved, whereby his or her identity information may be hijacked or electronic signature may be deprived.

This type of fraudulent transaction (QRishing) caused by replacement of QR code frequently occurs in the offline mobile authentications. Therefore, no matter how a back end of authentication system is guaranteed by a strong blockchain, if a system or an authentication request value (QR code, return URL and the like) initially accessed by a user is faked, the user's authentication information and electronic signature can be stolen or used illegally at any time.

Furthermore, situations have recently surfaced due to outbreak of Corona virus where a safe face-to-face transaction must be made offline while maintaining a distance of 2 or more meters, and therefore an improved method is necessitated where a user's own authentication value or electronic signature value can be transmitted after safely ascertaining the other party to a transaction at a quarantine distance of 2 or more meters in order to improve the QR or NFC authentication method authenticated only within a close distance of 1 meter.

### Detailed Description of the Invention

### Technical Subject

The present invention has been derived to solve the aforementioned problems and it is an object of the present invention to provide a DID based online mutual authentication and transaction technology in which a user's authentication value is transmitted to a relevant service after first ascertaining whether a service requesting a user authentication is a legitimate service, and an offline mutual authentication and transaction method in which a user's authentication value can be transmitted after first ascertaining whether a transaction party (or loT device) is a legitimate counterpart even at a 2 or more meter offline safe quarantine distance.

### Technical Solution

In one general aspect of the present invention, there may be provided a blockchain based authentication and transaction system including a user DID (Distributed Identity) wallet which is an application program installed on a user's mobile terminal.

Here, the user DID (Distributed Identity) wallet may allow a user to ascertain whether a counterpart is a legitimate (genuine) party by verifying a counterpart's VP (Verifiable Presentation) and expressing the verified counterpart ascertainment information on a screen when the counterpart's VP provided from a counterpart system which is an authentication or transaction counterpart is obtained.

In one exemplary embodiment, the user DID wallet may decode the counterpart's VP using a public key corresponding to the counterpart's VP, verify the counterpart' electronic signature included in the decoded VP, obtain an issuer `s electronic signature that has issued the counterpart' VC from the counterpart's VC(Verifiable Credential) included in the decoded VP, and screen-express the verified counterpart's confirmation information to the user after verifying the issuer's electronic signature using the public key of the issuer.

In one exemplary embodiment, the counterpart's VP may be a static VP of pre-generated fixed value, or a dynamic VP dynamically generated by the counterpart's DID wallet at the authenticated or transacted time by encoding the pre-issued counterpart's VC using a private key.

In one exemplary embodiment, the blockchain based authentication and transaction system may further include a counterpart's DID wallet which is an application program installed on the counterpart's system. Here, the counterpart's DID wallet may mount the counterpart's VP on a QR (Quick Response) code, or may provide the QR code to the user by mounting the network access information of repository on the QR code that is accessible to the counterpart's VP. Here, the user's DID wallet may obtain the counterpart's VP through recognition of the QR code.

In one exemplary embodiment, the counterpart's DID wallet may allow submitting the user's VP to the counterpart' system or to a submitter designated by the counterpart's system or the counterpart's VC only when the counterpart is authenticated by the user through the screen-expressed counterpart's confirmation information.

In one exemplary embodiment, the counterpart's DID wallet may extract a terminal identification value from a short-range wireless signal transmitted from the counterpart's system or from an interlocking device that interlocks with the counterpart's system, and obtain the counterpart's VP corresponding to the terminal identification value from a terminal information server by transmitting the extracted terminal identification value to the terminal information server.

In one exemplary embodiment, the counterpart's DID wallet may additionally perform a verification on whether the terminal identification value extracted from the short range wireless signal and the terminal identification value of the counterpart's system included in the decoded VP are matched, and may allow submitting the user's VP to a submitter designated by the counterpart's system or the counterpart's VP only when the said verification is normally realized.

In one exemplary embodiment, the counterpart's DID wallet may provide a screen where a remittance amount can be inputted only to a deposit address based on recipient information expressed on the screen as the counterpart's confirmation information when the transaction corresponds to a blockchain based remittance transaction, and may transmit to the relevant remittance address when the user remits the remittance amount.

### Advantageous Effects

The exemplary embodiments of the present invention have advantageous effects of providing an offline mutual authentication and transaction method where a safer identity authentication and transaction is made possible by providing a DID based online mutual authentication technology in which a user authentication value is transmitted to a relevant service after first ascertaining whether a service requesting a user authentication is a legitimate service, and a safe identity authentication and transaction is also made possible while maintaining a safe quarantine distance even offline.

### Brief Description of the Drawings

FIG. 1 is a schematic view illustrating a flow of website log-in using a standard DID based online user authentication according to the prior art.
FIG. 2 is a schematic view illustrating a flow of electronic signature using a standard DID based online user authentication according to the prior art.
FIG. 3 is a schematic view illustrating a flow of authenticating an online user using a standard DID including a SVC authentication of a service provider and providing a service according to an exemplary embodiment of the present invention.
FIG. 4 is a schematic view of receiving and providing a service by receiving a user's electronic signature using a standard DID including a SVC of a service provider according to an exemplary embodiment of the present invention.
FIG. 5 is a schematic view illustrating a flow of an offline mutual authentication between users through an authentication BLE according to an exemplary embodiment of the present invention.
FIG. 6 is a schematic view illustrating a flow of an offline mutual authentication between a user and a device through an authentication BLE according to an exemplary embodiment of the present invention.
FIG. 7 is a schematic view illustrating a flow of allowing a log-in subsequent to verification of service and user after verifying a service provider using a user wallet according to an exemplary embodiment of the present invention.
FIG. 8 is a schematic view illustrating a flow of submitting a user's electronic signature after confirming a contract counterpart in the blockchain using a QR code in the processing of an electronic signature according to an exemplary embodiment of the present invention.
FIG. 9 is a schematic view illustrating a flow of transmitting user's private information to a service provider after confirming service provider's information offline using a QR code according to an exemplary embodiment of the present invention.
FIG. 10 is a schematic view illustrating a flow of submitting user's authentication information after confirming a transaction counterpart using an authentication BLE under an offline environment with 2 or more meters distanced according to an exemplary embodiment of the present invention.
FIG. 11 is a schematic view illustrating a service flow of a first exemplary embodiment regarding a remittance transaction method after verification of VP of remittance counterpart according to an exemplary embodiment of the present invention.
FIG. 12 is an exemplary view of service screen in the case of FIG. 11.
FIG. 13 is a schematic view illustrating a service flow of a second exemplary embodiment regarding a remittance transaction method after confirmation of VP of a remittance counterpart according to an exemplary embodiment of the present invention.
FIG. 14 is an exemplary view of service screen in the case of FIG. 13.
FIG. 15 is a schematic view illustrating a service flow regarding a cryptocurrency withdrawal transaction method according to an exemplary embodiment of the present invention.
FIG. 16 is an exemplary view of service screen in the case of FIG. 15.

### Detailed Description

The invention described hereunder may be applied with various changes and several exemplary embodiments, and particular exemplary embodiments will be described in detail through exemplary drawings and detailed descriptions.

However, it should be noted that the present invention is not limited to particular exemplary embodiments, and it will be appreciated that the present invention described is intended to embrace all such alterations, modifications, and variations that fall within the scope and novel idea of the present invention. In describing the present invention, detailed descriptions of well-known art in the art may be omitted to avoid obscuring appreciation of the invention with unnecessary details.

Numerals (e.g., first, second, etc.) used in the process of explaining the present specification are merely identifying numerals to distinguish one element from another element.

Furthermore, throughout the specification, it will be understood that when an element is referred to as being "connected", "coupled" or "accessed" to another element, it can be directly connected, coupled or accessed to the other element or intervening elements may be present unless explicitly described to the contrary.

In addition, throughout the specification, when an element "includes" another element, this does not mean that another element is precluded but may further include another element unless explicitly described to the contrary.

Now, exemplary embodiments of the present invention will be described in detail with reference to the accompanying drawings.

Toward this end, the conventional general DID technology will be explicitly described hereunder.

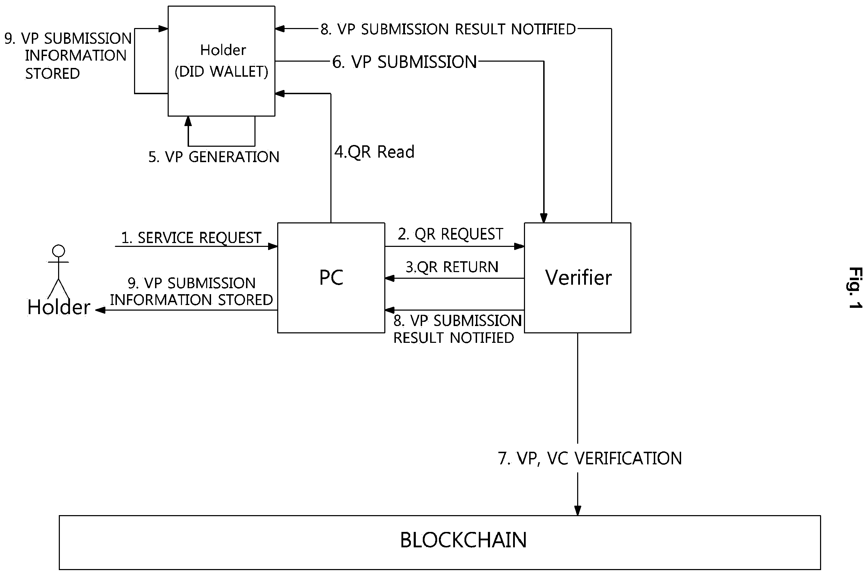

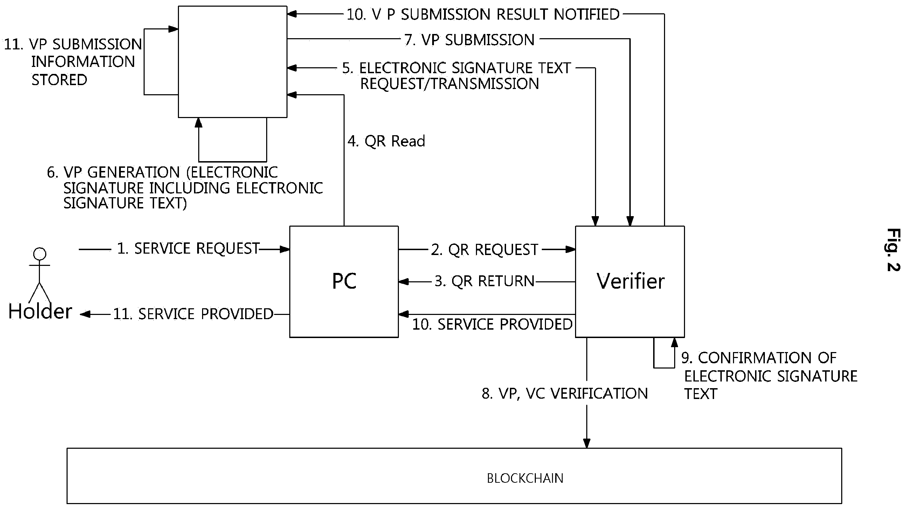

FIG. 1 is a schematic view illustrating a flow of website log-in using a standard DID based online user authentication according to the prior art, and FIG. 2 is a schematic view illustrating a flow of electronic signature using a standard DID based online user authentication according to the prior art.

FIG. 1 shows a service process flow in a case of submitting a VR value which is a user authentication value using a return URL mounted on a QR code when the QR code expressed in a PC is scanned using a general DID wallet application (App), and FIG. 2 shows a service process flow in a case of submitting an electronically signed VP to a relevant message by requesting a transaction message with a return URL of a service provider and receiving the same when processing a content of an electronic signature which is too big to be contained in the QR code.

As explained above, the general user authentication or an electronic signature flow is such that a user authentication or an electronic signature is realized by allowing a service provider to provide a QR code mounted with an address that receives a user VP or a link to a user wallet, and a user to submit the VP to a relevant URL address or to the link.

That is, the authentication process based on the standard DID according to the prior art only performs a user authentication and cannot process the authentication on whether a service provider providing a relevant service or a counterpart requesting an electronic signature is legitimate or genuine.

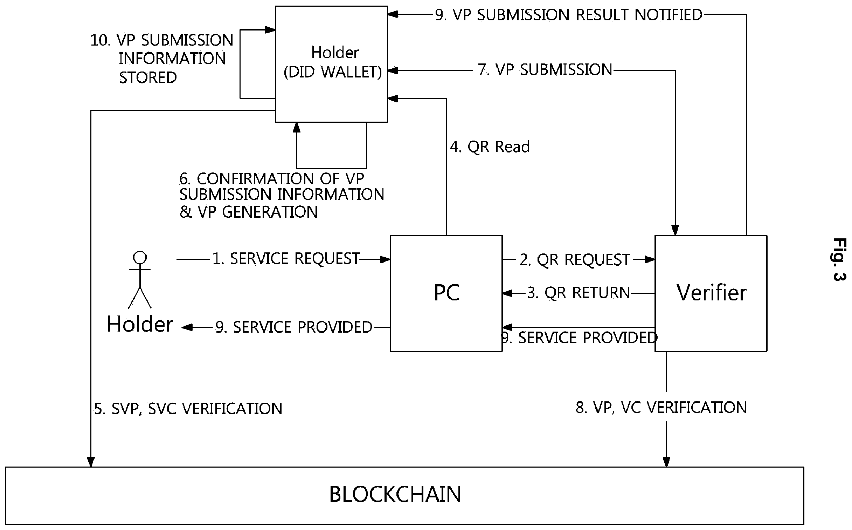

Unlike the prior art, the present invention provides a DID based online mutual authentication and electronic signature technology in which a user authentication value is transmitted to a relevant service after first confirming whether a service requesting a user authentication is a legitimate or genuine service, and also provides an offline mutual authentication and electronic signature technology in which a user authentication value is transmitted after first confirming offline whether a transaction counterpart (or loT device) is a legitimate counterpart. Now, in relation thereto, the technical method according to the present invention will be described hereunder in detail with reference to FIGS. 3~10.

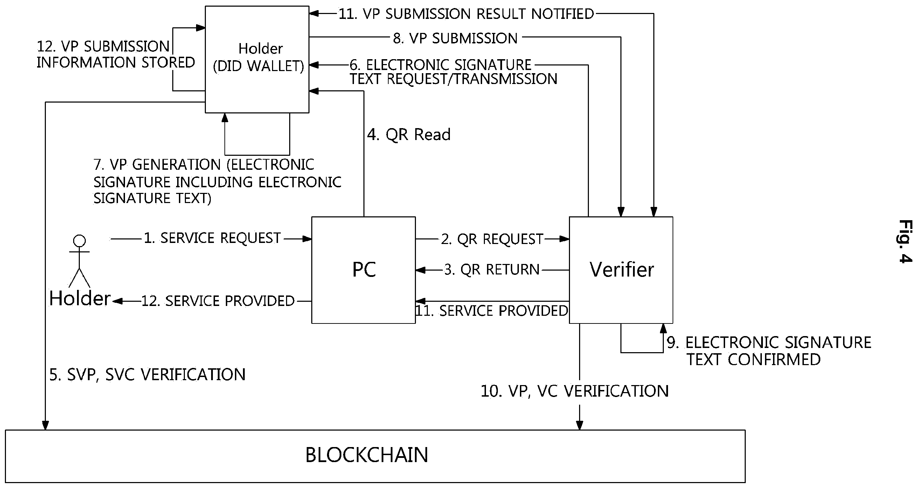

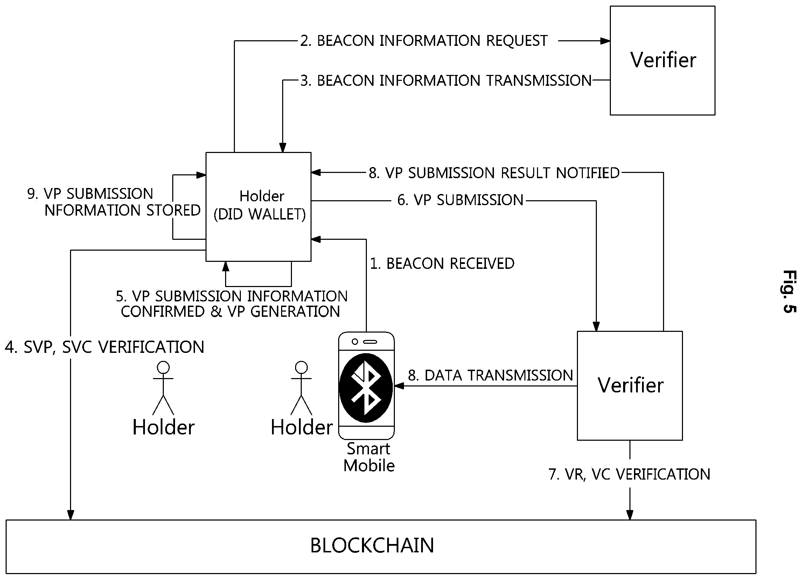

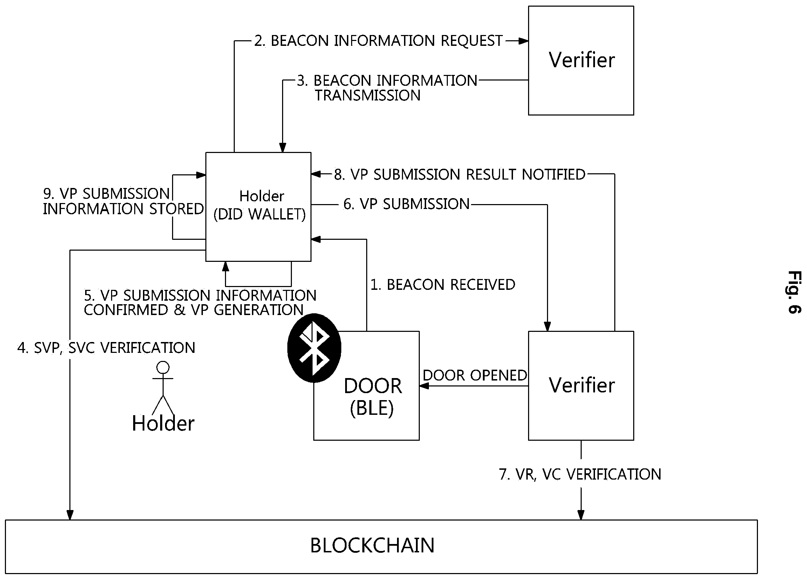

In description of FIGS. 3 ~ 6, a holder (DID wallet) refers to a user DID wallet as an application program mounted on a user mobile terminal, a PC (Personal computer) refers to a terminal used for allowing a user to use a particular online service, and Verifier refers to a counterpart system that becomes an authentication counterpart or a transaction counterpart in relation to a user (e.g., a system of online service provider in cases of FIGS. 3 and 4, and a counterpart system of offline transaction in cases of FIGS. 5 and 6).

Furthermore, in description of FIGS. 3~6, a SVC (Service Verifiable Credential) refers to a counterpart's VC (Verifiable Credential) issued by a predetermined issuer and a SVP (Service Verifiable Presentation) refers to a counterpart's VP (Verifiable Presentation) generated by the said SVC.

### [DID based online mutual authentication - User authentication information transmission method subsequent to confirmation of service provider using the SVP]

FIG. 3 is a schematic view illustrating a flow of authenticating an online user using a standard DID including a SVC authentication of a service provider and providing a service according to an exemplary embodiment of the present invention.

Referring to FIG. 3, concomitant with a user's requesting a particular service provided by a predetermined online service using his or her own PC [See the reference numeral 1 of FIG. 3], a QR code is returned by a counterpart system by an online service provider to allow the QR code to be expressed on a user's PC screen [See reference numeral 3 of FIG. 3]. At this time, the QR code may include an online service provider's own VP (i.e., SVP) in addition to the return URL requesting the user's VP.

Thereafter, when a user recognizes a QR code using a DID wallet installed on a user's own mobile terminal [See reference numeral 4 of FIG. 3], the user DID wallet may perform a verification on whether the online service provider, who is a counterpart, is a legitimate using a SVP obtained through the QR code recognition [See reference numeral 5 of FIG. 3].

At this time, the verification process on whether the counterpart is legitimate through the user's DID wallet may be explained as under.

First, the user's DID wallet may inquire into a public key from a relevant blockchain system by referring to the DID information (Distributed Identification information) (which may be one type of a public key address) included in the SVP obtained through the QR code recognition, and may decode the data included in the SVP using the inquired public key.

At this time the decoded SVP may include the counterpart VC (i.e., SVC), a counterpart's electronic signature value. Furthermore, the decoded SVP may include not only the identification information that can confirm a relevant counterpart (hereinafter simply referred to as counterpart confirmation information but also an electronic signature value of an issuer who issued the SVC and the public key address.

As a result, the user DID wallet may verify the counterpart's electronic signature value using a public key corresponding to the SVP. To be more specific, the user DID wallet may verify whether the counterpart's electronic signature value is legitimate or genuine by confirming whether the generated electronic value and the counterpart's electronic signature value included in the decoded SVP are matched using a public key corresponding to the SVP and Hash function (which is a Hash function used by the counterpart when generating a relevant electronic signature value).

Furthermore, the user DID wallet may verify an issuer's electronic signature value. To be more specific, the user DID wallet may first obtain a relevant issuer's public key using the issuer's public key address included in the SVC, and may verify the genuineness of the issuer's electronic signature value (i.e., verification of genuineness per se of the SVC) by confirming whether the generated electronic signature value and the issuer's electronic signature value included in the SVC are matched using the obtained issuer's public key and the predetermined Hash function (which is a Hash function used when the issuer generates a relevant electronic signature value).

As explained above, when the verification of genuineness of the SVP and the SVC is completed, the user DID wallet may express, on a wallet App screen, the counterpart's confirmation information (i.e., the verification-completed counterpart's confirmation information) included in the decoded SVP. As a result, the user may confirm the counterpart's confirmation information verified through the wallet App screen, through which the verification of genuineness of the counterpart can be confirmed.

When the genuineness of counterpart is confirmed through the aforesaid processes and when the user performs the confirmation process (e.g., by click of confirmation button) through the wallet App screen, the user DID wallet may generate a user VP and allow submitting the same to a submitter (i.e., return URL) designated by the user VP at the Verifier (i.e., counterpart system) or SVC [See reference numerals 6 and 7 of FIG. 3].

At this time, the user's VP submission process and the subsequent service processing based on the user authentication [See reference numerals 8 ~ 10 of FIG. 3] are essentially the same processes as those in the FIGS. 1 and 2 and therefore, detailed explanation thereto will be omitted.

The service provider (Verifier in FIG. 3) which is a counterpart system may provide a statically generated SVP and may provide a dynamically generated SVP as well. At this time, there must be a service DID wallet on the service in order to dynamically provide the SVP.

In this case, the service DID wallet may provide a QR code to the user after the QR code is mounted with SVP, or the QR code is mounted with network access information of repository (storage) accessible to the SVP.

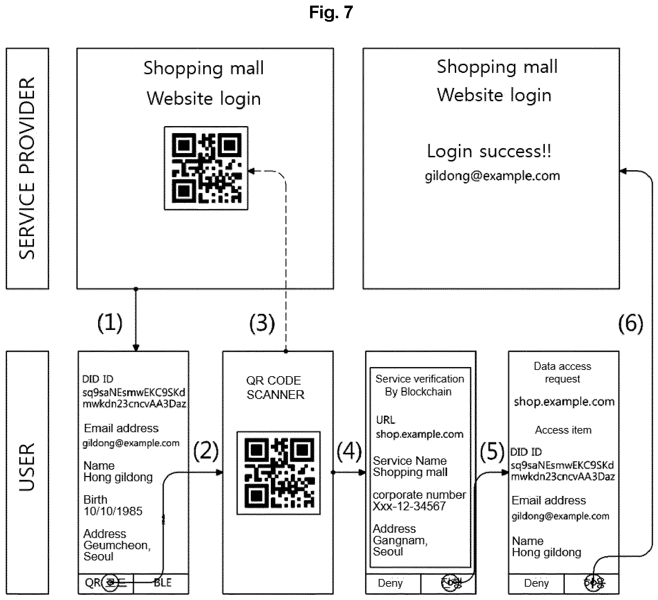

An exemplary screen of service processing regarding the case of online mutual authentication of the aforementioned FIG. 3 is illustrated in FIG. 7.

At this time, the online service mutual authentication process of the aforementioned FIG. 3 may be identically applied to the electronic contract process of FIG. 4.

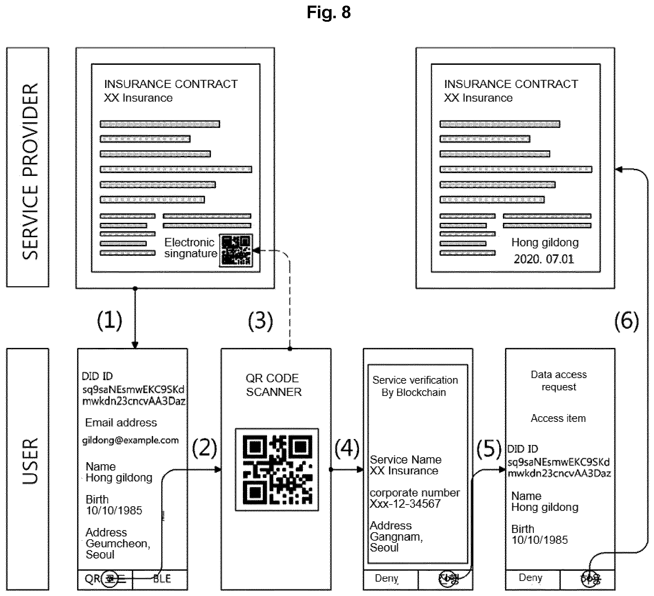

FIG. 4 shows a DID based online electronic signature case where, after the service provider is confirmed using the SVP, a process of transmitting a user signature for electronic contract is illustrated. An exemplary screen of service processing regarding the case of online mutual authentication of the aforementioned FIG. 4 is illustrated in FIG. 8.

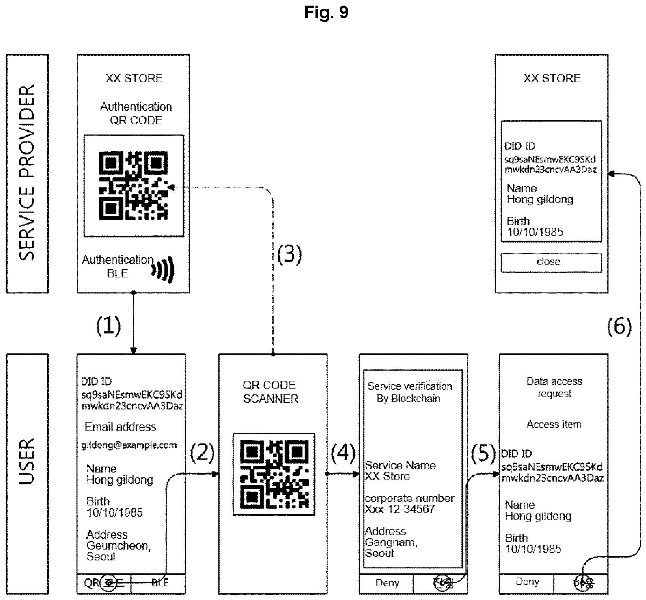

Furthermore, the online service mutual authentication process of aforesaid FIG. 3 may be similarly applied to a case of offline mutual authentication of FIGS. 5 and 6. Although the QR code may be also utilized in the case of offline mutual authentication (See the exemplary screen of service processing in FIG. 9), FIGS. 4 and 6 exemplify a case where a BLE beacon (Bluetooth Low Energy beacon), which is a short range wireless signal, is utilized. When the BLE beacon is used as mentioned above, a service may be realized to allow an offline mutual authentication even at a 2 or more meters distance to be performed.

In order to realize the offline mutual authentication using the aforesaid BLE beacon, the counterpart system or a device interlocked therewith is required to be mounted with a BLE beacon transmission module. At this time, when a device mounted with a BLE transmission module is a mobile terminal, it operates simply as a client and cannot operate as a server such that it is impossible to transmit by allowing the SVP to be mounted within a message of BLE beacon signal. Thus, when an offline mutual authentication service using the BLE beacon is to be realized, there may be an additional configuration of TIS (Terminal Information Server) as shown in FIGS. 5 and 6. According to FIGS. 5 and 6, although the TIS is illustrated as a device independent from the Verifier which is a counterpart system, the TIS may be included within the Verifier depending on the system realizing method, or the TIS may be so realized as to be interlocked with the blockchain system.

### [Offline mutual authentication - a user authenticating method after confirmation of offline counterpart using the SVP, albeit using the BLE beacon and the TIS]

FIG. 5 is a schematic view illustrating a flow of an offline mutual authentication between a user and a counterpart user through an authentication BLE according to an exemplary embodiment of the present invention.

Referring to FIG. 5, the user DID wallet may receive a BLE beacon signal from a counterpart side [See reference numeral 1 of FIG. 5], from which a UUID (i.e., terminal identification information) included in the BLE beacon signal may be obtained. At this time, it should be apparent that terminal authentication information may be included within the BLE beacon signal in addition to the terminal identification information depending on a realizing method.

As a result, the user DID wallet may obtain a counterpart SVP corresponding to a relevant terminal identification information by transmitting the terminal identification information to the TIS [See reference numerals 2 and 3 of FIG. 5]. Thereafter, the user DID wallet may perform a process of confirming whether the counterpart is genuine by using the obtained SVP [See reference numeral 4 of FIG. 5]. At this time, the process of confirming whether the counterpart is genuine is essentially same as that of explanation of FIG. 3 such that detailed explanation thereto will be omitted.

When the said process of confirming whether the counterpart is genuine is completed, the user DID wallet may express the verified counterpart confirmation information through a wallet App screen, and when a counterpart confirmation is completed from the user, the user DID wallet may generate a user VP and transmit the same to the counterpart system [See reference numerals 5 and 6 of FIG. 5]. At this time, the user's VP submitting process and the subsequent service processing [See reference numerals 7 ~ 9 of FIG. 5] based on the user authentication are the essentially same processes as those of the said FIGS. 1 and 3, such that detailed explanation thereto will be omitted.

In the aforesaid offline mutual authentication process, the user DID wallet may further add the following process. That is, the user DID wallet may determine that the SVP content is legitimate only when the counter intrinsic identification value (UUID) received from the BLE beacon and the intrinsic identification value within the SVP received from the TIS are matched, and may allow the counterpart confirmation information to be expressed on the wallet App screen.

Furthermore, when a counterpart BLE data comprised of counterpart intrinsic identification value and authentication value (a variable value changing at every 60 seconds) is received, the user DID wallet may transmit to the counterpart side by signing the counterpart's authentication value using the user's own private key when the user VP is submitted.

At this time, the counterpart system may additionally confirm that a relevant user exists at a position near to the BLE beacon transmission area based on the authentication value included in the user VP received from the user side in the process of verifying the user VP in the blockchain system.

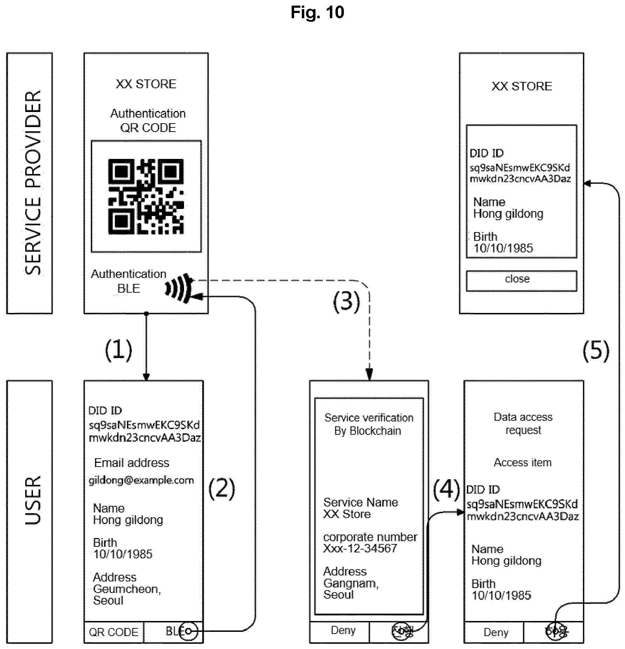

An exemplary screen of service processing regarding the case of online mutual authentication of the said FIG. 5 is illustrated in FIG. 10.

### [Offline mutual authentication - Method of authenticating a user after confirmation of offline IoT using the SVP]

FIG. 6 is a schematic view illustrating a flow of an offline mutual authentication between a user and a device through an authentication BLE according to an exemplary embodiment of the present invention.

Referring to FIG. 6, the present invention may realize a mutual authentication technology between a user and an unmanned device (door, automatic alcoholic beverage vending machine as exemplified in FIG. 6) in addition to offline mutual authentication between persons as sh*"*own in FIG 5.

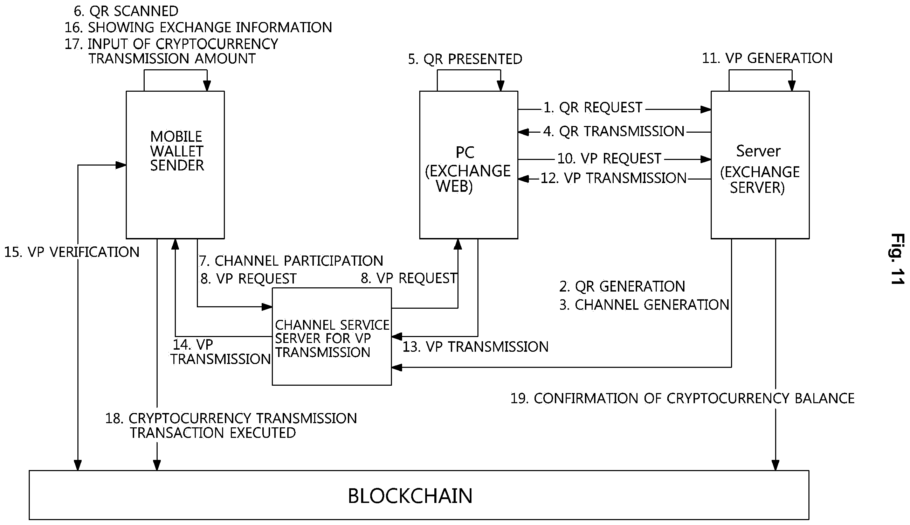

The aforementioned blockchain based authentication and transaction system may be identically applied to other transactions such as remittance and deposit and withdrawal, which will be explained with reference to FIGS. 11 ~ 16.

Although the conventional blockchain transaction did not contain private information of a recipient or of a receiver in the blockchain because of emphasis of anonymity, the trend is that use of real names between a remitter and a recipient is gradually taking root while relevant laws are amended. Concomitant with this trend, the aforementioned technology of the present invention may be also used in the confirming process between a remitter and a recipient during cryptocurrency (coin/token) transactions in addition to identity authentication.

In the conventional technology, users had to transmit coins and tokens only to a public key address while not confirming to whom the coins and tokens are transmitted. Thus, errors have occurred where an erroneous public key address is inputted, and problems have occurred where, even if a public key address is correct, a blockchain was mistakenly chosen and remittance was made to a relevant public key address.

Therefore, the technology of the present invention, when applied to coin/token remittance transactions, can realize a safe transaction using a method of sending a remittance amount via blockchain by receiving the remittance amount only through a public key address, which is a relevant deposit address, after first confirming recipient information based on DID, and expressing to a user, by a wallet, counterpart confirmation information (recipient name, blockchain, public key address and the like) contained in the relevant DID information under the user's approval (consent).

Depending on a method realizing the system, a wallet configured to send the transaction may be also implemented by allowing even the remittance amount to be contained in the DID information without a user's input of the remittance amount.

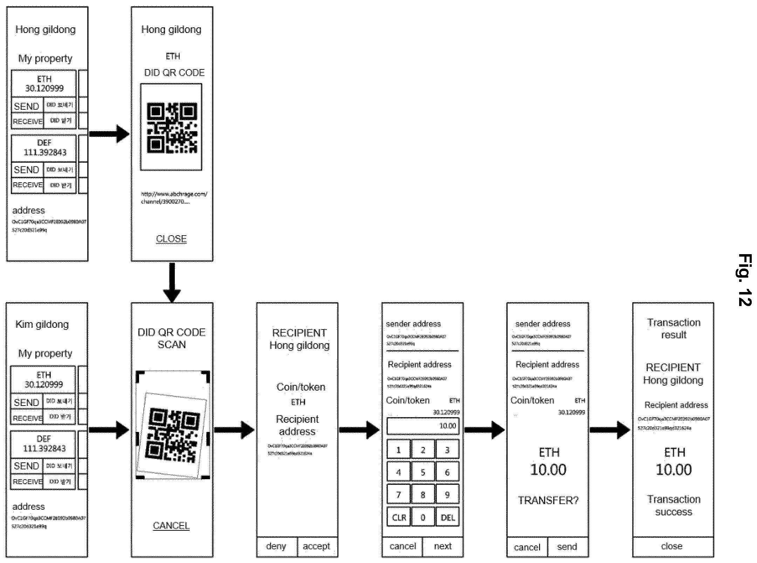

To be more specific, as shown in FIGS. 11 and 12, the transaction may be the one using a mobile device versus a mobile device between users. Here, FIG. 11 is a schematic view illustrating a service flow of a first exemplary embodiment regarding a remittance transaction method after verification of VP of remittance counterpart according to an exemplary embodiment of the present invention, and FIG. 12 is an exemplary view of service screen in the case of FIG. 11.

Referring to FIGS. 11 and 12, these figures illustrate transaction examples where, when a person collecting money via a mobile device presents VR information contained with recipient's information via QR (or the network access information configured to obtain VP information of the receiver may be presented via QR code), a remitting person acquires the VP information presented by the recipient, verifies the same via blockchain, confirms the recipient's information from a screen, and allows a remitter to confirm the recipient's information, then, transaction is realized by inputting a remittance amount using a wallet after the remittance address is fixed by the blockchain of recipient included in the VP and the public key address.

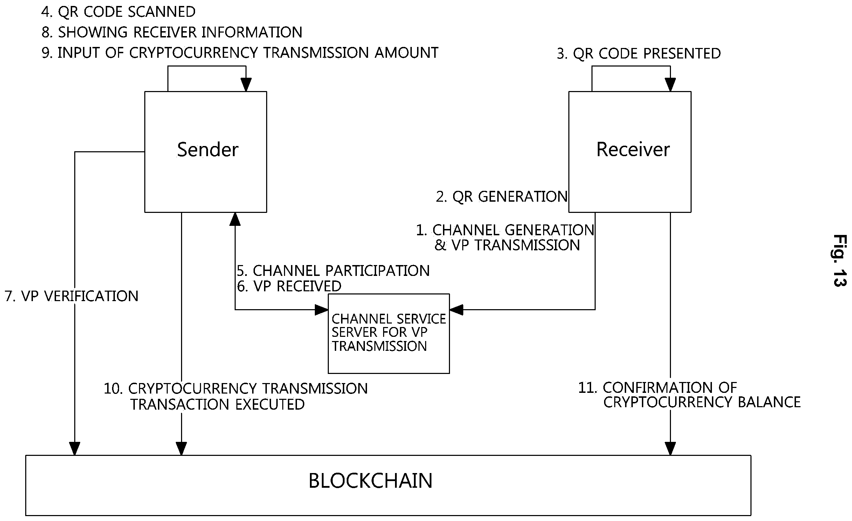

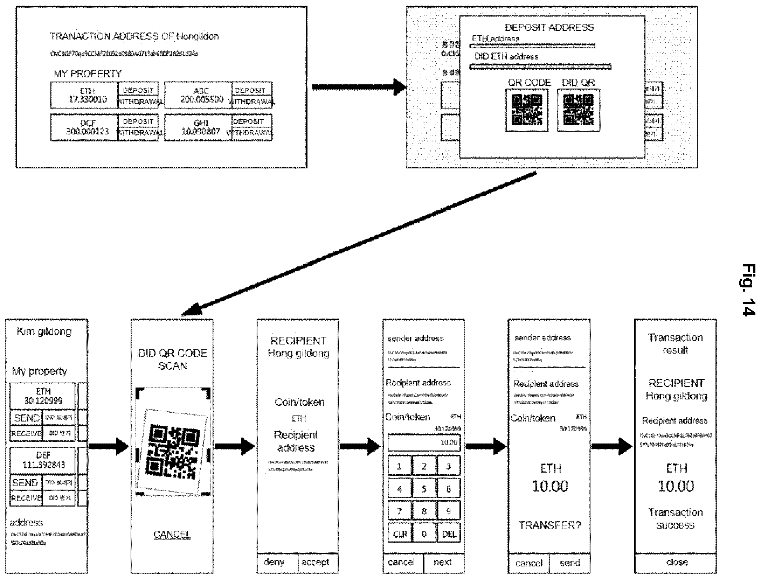

Another applicable example is the one where coins/tokens possessed by his or her own mobile wallet are deposited using cryptocurrency exchange website, which is illustrated in FIGS. 13 and 14.

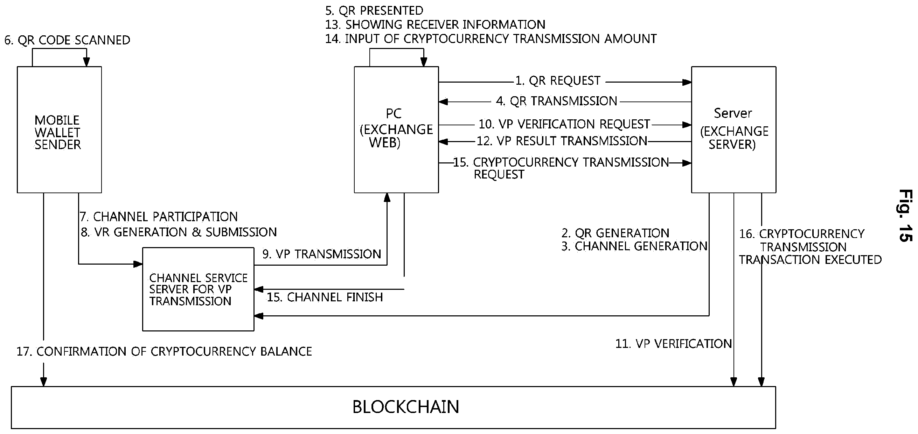

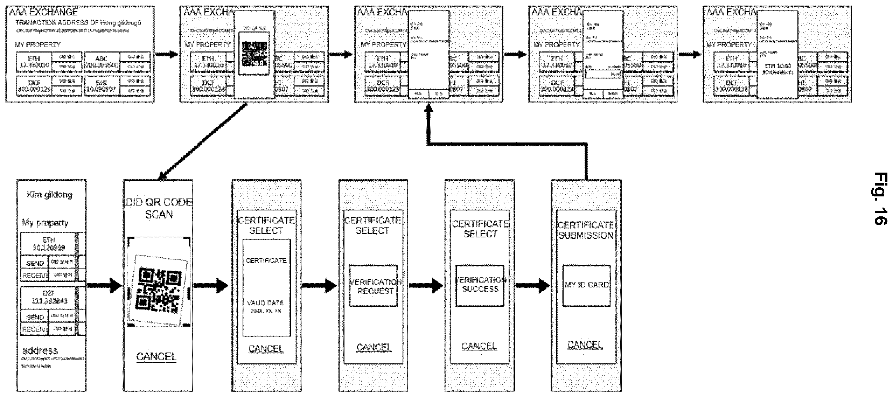

Still another applicable example is the one where coins/tokens possessed by cryptocurrency exchange website are withdrawn using his or her own mobile wallet, which is illustrated in FIGS. 15 and 16.

Referring to FIGS. 13 and 14, in a case where coins/tokens possessed by his or her own mobile wallet are deposited to the cryptocurrency exchange website, the transactions are implemented in such a manner that QR code of VP acquisition purpose presented by the cryptocurrency exchange is scanned by a depositor using the mobile wallet and the VP of the cryptocurrency exchange is verified by blockchain, and when the verified VP information is expressed to a user, and the user consented to the depositor information, the user inputs only the amount to be deposited from the mobile device and send the transaction from the mobile App, using some pieces of the information in the information included in the VP from the wallet while the blockchain and the recipient address are fixed.

Furthermore, referring to FIGS. 15 and 16, in a case of withdrawing coins/tokens possessed by the cryptocurrency exchange website using his or her own mobile wallet, the transactions are implemented in such a manner that, when the QR code for VP submission presented by the exchange is first scanned by a mobile wallet, a user's own (i.e., withdrawer) VP stored in the wallet is submitted to an address contained in the QR code from the mobile wallet, the cryptocurrency exchange website verifies the submitted VP of the user using the blockchain, the user consents to the withdrawal information from the web screen, and the user inputs the withdrawal amount after fixing the blockchain, the recipient address and the like using some pieces of information in the information contained in the VP, the exchange sends the transaction via the blockchain.

The blockchain based authentication and transaction system according to the aforementioned present invention may be implemented by a computer-readable media in a computer-readable code. The computer-readable media may include all types of recording media stored with data decoded by computer system. By way of example, and not limitation, such computer-readable media may comprise ROM (Read Only Memory), RAM (Random Access Memory), magnetic tapes, magnetic discs, flash memory, optical data storage and the like. Furthermore, the computer-readable media may be distributed to a computer system connected to a computer communication network and stored and implemented by a code that can be read in a distributed way.

Although the present invention has been described in terms of exemplary embodiments, the present invention is not limited thereto. It should be easily appreciated that variations and changes may be variably made in the embodiments described by persons skilled in the art without departing from the teachings and scope of the present invention as defined by the claims.

## Claims

1. A blockchain based authentication and transaction system including a user DID (Distributed Identity) wallet which is an application program installed on a user' s mobile terminal, wherein the user DID wallet allows a user to confirm whether a counterpart is a legitimate party by verifying a counterpart's VP and expressing the verified counterpart confirmation information to the user on a screen when the counterpart's VP provided from a counterpart system which is an authentication or transaction counterpart is obtained.

2. The system of claim 1, wherein the user DID wallet decodes the counterpart' s VP using a public key corresponding to the counterpart' s VP, verifies the counterpart' electronic signature included in the decoded VP, obtains an issuer `s electronic signature that has issued the counterpart' VC from the counterpart's VC(Verifiable Credential) included in the decoded VP, and screen-expresses the verified counterpart's confirmation information to the user after verifying the issuer's electronic signature using the public key of the issuer.

3. The system of claim 1, further comprising a counterpart' s DID wallet which is an application program installed on the counterpart' s system, wherein the counterpart' s VP is a static VP of pre-generated fixed value, or a dynamic VP dynamically generated by the counterpart's DID wallet at the authenticated or transacted time by encoding the pre-issued counterpart's VC using a private key, the counterpart's DID wallet mounts the counterpart's VP on a QR (Quick Response) code, or provides the QR code to the user by mounting the network access information of repository on the QR code that is accessible to the counterpart's VP, and the user's DID wallet obtains the counterpart's VP through recognition of the QR code.

4. The system of claim 1, wherein the counterpart' s DID wallet allows submitting the user' s VP to the counterpart' system or to a submitter designated by the counterpart' s system or the counterpart' s VC only when the counterpart is authenticated by the user through the screen-expressed counterpart's confirmation information.

5. The system of claim 4, wherein the counterpart' s DID wallet extracts a terminal identification value from a short-range wireless signal transmitted from the counterpart' s system or from an interlocking device that interlocks with the counterpart's system, and obtains the counterpart's VP corresponding to the terminal identification value from a terminal information server by transmitting the extracted terminal identification value to the terminal information server.

6. The system of claim 5, wherein the counterpart' s DID wallet additionally performs a verification on whether the terminal identification value extracted from the short range wireless signal and the terminal identification value of the counterpart' s system included in the decoded VP are matched, and allows submitting the user's VP to a submitter designated by the counterpart's system or the counterpart's VP only when the said verification is normally realized.

7. The system of claim 1, wherein the counterpart' s DID wallet provides a screen where a remittance amount can be inputted only to a deposit address based on recipient information expressed on the screen as the counterpart' s confirmation information when the transaction corresponds to a blockchain based remittance transaction, and transmits to the relevant remittance address when the user remits the remittance amount.
